# EUROPEAN PATENT SPECIFICATION

(11) **EP 1 253 821 B1**
(45) Date of publication and mention of the grant of the patent: **06.04.2005**
(21) Application number: 01948917.8
(22) Date of filing: 02.02.2001
(51) Int. Cl.: A01K 1/035, A01K 13/00

(54) **PET BLANKET**
DECKE FÜR TIERE
COUVERTURE POUR ANIMAUX DE COMPAGNIE

(30) Priority: 07.02.2000 GB 0002635
(43) Date of publication of application: 06.11.2002
(73) Proprietor: NORBROOK LABORATORIES LIMITED, Newry BT35 6JP (GB)
(72) Inventor: DUFFY, Sean, Newry, Co. Down BT35 0PZ (GB); CROMIE, Lillian, Co. Down BT35 0ZZ (GB); BLAKELY, William, Newry, Co. Down BT35 8JZ (GB)
(74) Representative: Ede, Eric
(86) International application number: PCT/GB2001/000431
(87) International publication number: WO 2001/056372

(56) References cited:
- US-A- 2 775 222
- US-A- 4 620 849
- US-A- 4 852 517
- US-A- 5 970 921

## Description

This invention relates to blankets for animals and in particular to pet blankets having anti flea repellent properties.

Flea infestation of animals can be both very troublesome to the animals suffering therefrom and also to any other animals or humans coming into contact therewith. If flea infestations are left untreated they can lead to substantial hair loss and irritation of the skin of the affected animal. If particularly prevalent or left untreated for a long period of time such infestations can lead to anaemia or even death of the animal through blood loss and subsequent weakness to the animal caused by the parasitic nature of the fleas.

Treatment of infested animals varies but generally they are treated by flea sprays or powders. The disadvantage of this is that they have to be applied in a well ventilated area as the active ingredients can cause irritation to the eyes or respiratory tract of the human user. Further, the treatments often have to be repeated each time the fleas reappear which can mean treatment at weekly intervals.

However, such sprays and powders cannot be used on sick and convalescing animals as it could be detrimental to their health. It is therefore necessary for such animals to be treated only by a veterinary surgeon which can lead the animal owner to further added expense. In young and nursing mothers, in order not to adversely affect the unborn or newly born young, the fleas should be removed by a use of a flea comb.

It is casier for the animal owners to try to prevent infestations rather than treat them as flea infestations lead to household soft furnishings and carpets also being affected. These have to be regularly treated with a suitable insecticide and subsequently vacuumed in order to prevent infestation by the fleas brought into the house by their animals. Such measures are laborious and time consuming especially if several rooms in the house have to be attended to in such a way.

Other preventative measures include treating the animal's bedding and basket with a suitable insecticide. This of course has to be reapplied frequently in order for it to remain effective. It also has to be reapplied each time the bedding is washed. Again this is rather laborious and many owners forget to do so.

Flea collars can also be used but have limited success. Further, particularly in cats, these collars often become slack through use and can cause injury due to the animal's front leg becoming caught therethrough. This can lead to substantial injuries to the cat such as burns or tears in the skin under the trapped front leg. These can be particularly common injuries where the owner does not buy new flea collars regularly and it becomes stretched with use.

An object of the present invention is to provide a pet blanket having anti flea properties which obviates or mitigates the aforesaid disadvantages of the prior art.

According to the present invention there is provided a pet blanket comprising two layers of material adapted to form a selectively closeable pocket, one layer being made from permeable material, the other being of an impermeable material, the blanket further comprising at least one insert for selective insertion into said pocket, said insert being of an absorbent material, the insert having been pre-treated with an emollient ester mixture containing at least one anti-flea agent, the nature of the material being adapted for optimum dispersal of the anti-flea active ingredients throughout the insert such that in use the permeable layer on contact with the animal subjects the animal to the activity of the anti flea agent.

Preferably the layers provide the pocket with an upper and lower surface.

Preferably the upper surface is permeable. Whilst advantageously the upper surface is made from a warm and comfortable material for contact with the animal lying thereon.

Further the lower surface is preferably a waterproof material for contact with the ground or basket. The material can be plastic laminate or plastic coated material such as cotton or nylon. More preferably PVC coated nylon is used.

Preferably the insert is impregnated with at least one anti flea agent but more preferably a combination is used.

The anti flea agents may comprise long or short acting anti flea regulators. These can comprise insect growth regulators such as methoprene either alone or in combination with adulticides such as a methoprene/permethrin combination.

The insert suitably comprises a section of suitably open celled or absorbent material such that in use the material provides a reservoir of active components. The material can be any open cell foam or absorbent matting such as cellulose(natural) or polyester (synthetic) mesh.

The invention will now be described in greater detail below.

In accordance with the present invention there is provided a animal or pet blanket having anti flea repellent properties wherein the Pet blanket comprises layers of substantially rectangular material having four edges, although any shape may be used. It should be noted that the term anti flea agents comprises compounds having either flea repellent properties or those which kill the fleas completely.

Generally the blanket is formed from two layers of material, having an upper and lower surface respectively. The two layers are formed from different materials but are of similar dimensions to each other. The upper surface is the surface which is intended to contact the animal when the blanket is in use. As such that surface is required to be made of a suitably warm and comfortable permeable material such as wool, synthetic wool or fleece type material in order to encourage the animal to lie or sleep on the blanket.

The lower and upper surfaces are attached to each other preferably by three corresponding edges. The fourth corresponding edges may be unattached to leave an opening or may be partially attached to form a central opening therein. The central opening is of marginally smaller dimensions than the length of the side and as such the joined surfaces form a flexible container or pocket. The opening can be selectively closed by the provision of suitable releasable fixing means such as hooks etc.

The lower surface is made from an impermeable and preferably waterproof material. The lower surface acts as the base of the blanket such that it contacts the floor or basket when the blanket is in use. The lower surface can be made from any suitable impermeable material but generally is a plastic laminate, plastic coated cotton or nylon, or PVC coated nylon.

Through the opening in the flexible container is inserted an insert of similar dimensions to that of the container layers. The insert is made from suitably open celled and/or absorbent material such as open celled foam, polyurethane foam or absorbent matting such as cellulose (natural) or polyester (synthetic) mesh. Due to the opening of the container or pocket being of marginally less dimensions than the insert itself the insert should be adapted to flex in order that it may be inserted through such a smaller opening. This provides that the insert once having returned to its usually unflexed form will be unable to readily pass through the opening and thereby prevents the insert from falling out unless when physically removed by the user who has to flex the sheet in order to remove it.

The insert is impregnated with anti flea agents and/or flea repellent agents. This can be carried out by various standard techniques which will be well known by those skilled in the art. Generally however it is achieved by mixing the active anti flea agents with an emollient ester mixture which is sprayed onto the insert. Due to the open celled or absorbent nature of the insert, dispersal of the active ingredients throughout the foam insert occurs.

The anti flea agents can be any suitable anti flea regulators. Generally these can comprise insect growth regulators such as methoprene either alone or in combination with adulticides such as a methoprene/permethrin combination. Other anti flea agents which can be used in this invention either alone or in combination include: Fipronil, Lufenuron, Imidacloprid, Pyriproxyfen, Diflubenzuron, Telflubenzuron, Triflumuron, Flufenoxuron, Hexaflumuron, Buprofezin, Pyrethrum, Pyrethrin, Pyrethroids, Carbamates. It is also envisaged that this system will provided a slow release of anti flea agents where release is dependent on the use of the blanket which in turn will provide increased duration of activity of anti flea agents (i.e. long acting).

It is anticipated that the insert would have to be replaced every six months.

The layers of material and insert must have sufficient dimensions to provide blanket of approximately 45cm x 60cm, although any suitable size can be used. The size of material for use in cat blankets is usually smaller than that for dogs and is generally in the region of 45cm x 45cm.

In use of the blanket, anti flea agents diffuse from the insert through the permeable layer of the blanket and onto the animal, thus irradicating the flea population with either immediate effect in the case of an adulticide or over time in the case of an insect growth regulator (inhibits the life cycle of the insect thereby interrupting proliferation).

The advantage of the present invention is that the impregnated insert can be removed so that the blanket can be washed without diluting the effect of the anti flea agents. The use of the permeable upper layer allows the repellent to diffuse therethrough to contact the animals whilst the waterproof layer prevents loss of the repellent on the ground or basket.

Further, more than one insert can be used with the same blanket i.e. the shelf life of the insert being determined by the depletion of the actives through the permeable upper layer. It is anticipated that the insert could be sold as a separate entity. Also every time the animal lies down on the blanket it receives a dose of anti flea agent.

## Claims

1. Pet blanket comprising two layers of material adapted to form a selectively closeable pocket, one layer being made from permeable material, the other being of an impermeable material, the blanket further comprising at least one insert for selective insertion into said pocket, said insert being of an absorbent material, the insert having been pre-treated with an emollient ester mixture containing at least one anti-flea agent, the nature of the material being adapted for optimum dispersal of the anti-flea active ingredients throughout the insert such that in use the permeable layer on contact with the animal subjects the animal to the activity of the anti flea agent.

2. Pet blanket according to claim 1 wherein the layers provide the pocket with an upper and lower surface.

3. Pet blanket according to claim 2 wherein the upper surface is permeable.

4. Pet blanket according to claim 3 wherein the upper surface is made from a warm and comfortable material for contact with the animal lying thereon.

5. Pet blanket according to claim 2 wherein the lower surface is a waterproof material.

6. Pet blanket according to claim 5 wherein the material is selected from the group consisting of plastic laminate, plastic coated cotton, plastic coated nylon or PVC coated nylon.

7. Pet blanket according to claim 1 wherein the emollient mixture comprises a combination of anti flea agents.

8. Pet blanket according to claim 7 wherein the anti flea agents comprise long or short acting anti flea agents.

9. Pet blanket according to claim 8 wherein the anti flea agents comprise insect growth regulators.

10. Pet blanket according to claim 9 wherein the insect growth regulator is methoprene.

11. Pet blanket according to claim 8 wherein the anti flea agents comprise adulticides.

12. Pet blanket according to claim 11 wherein the adulticide is permethrin.

13. Pet blanket according to claims 7-12 wherein the anti flea agents comprise a combination of an insect growth regulator and adulticide.

14. Pet blanket according to claim 13 wherein the combination is a methoprene/permethrin combination

15. Pet blanket according to claims 1-14 wherein the insert comprises a section of material adapted to provide a reservoir for the anti flea agents.

16. Pet blanket according to claim 15 wherein the material is an open cell foam.

17. Pet blanket according to claim 16 wherein the open celled foam is polyurethane foam

18. Pet blanket according to claim 16 wherein the material is an absorbent matting.

19. Pet blanket according to claim 19 wherein the absorbent material is a natural cellulose.

20. Pet blanket according to claim 19 wherein the absorbent material is a synthetic polyester mesh.

21. Pet blanket according to any one of claims 1-20 wherein the anti flea agents can be chosen form the group consisting of Fipronil, Lufenuron, Imidacloprid, Pyriproxyfen, Diflubenzuron, Telflubenzuron, Triflumuron, Flufenoxuron, Hexaflumuron, Buprofezin, Pyrethrum, Pyrethrin, Pyrethroids, Carbamates.

## Patentansprüche

1. Haustierdecke, umfassend zwei Materialschichten, die ausgebildet sind, um eine selektiv verschließbare Tasche zu bilden. wobei eine Schicht aus durchlässigem Material hergestellt ist, wobei die andere aus einem undurchlässigen Material hergestellt ist. wobei die Decke weiterhin mindestens einen Einsatz zum selektiven Einfügen in die Tasche umfasst, wobei der Einsatz aus einem saugfähigen Material besteht, wobei der Einsatz mit einer erweichenden Estermischung vorbehandelt wurde, die mindestens ein Antiflohmittel enthält, wobei das Wesen des Materials für eine optimale Verteilung der Antiflohwirkstoffe über den gesamten Einsatz ausgebildet ist, derart, dass bei der Verwendung die durchlässige Schicht bei Kontakt mit dem Tier das Tier der Wirkung des Antiflohmittels aussetzt.

2. Haustierdecke nach Anspruch 1. wobei die Schichten die Tasche mit einer oberen und einer unteren Oberfläche versehen.

3. Haustierdecke nach Anspruch 2, wobei die obere Oberfläche durchlässig ist.

4. Haustierdecke nach Anspruch 3. wobei die obere Oberfläche aus einem warmen und bequemen Material für den Kontakt mit dem darauf liegenden Tier besteht.

5. Haustierdecke nach Anspruch 2, wobei die untere Oberfläche ein wasserdichtes Material ist.

6. Haustierdecke nach Anspruch 5, wobei das Material aus der Gruppe, die Kunststofflaminat, kunststoffbeschichtete Baumwolle. kunststoffbeschichtetes Nylon oder PVC-beschichtetes Nylon umfasst, ausgewählt wird.

7. Haustierdecke nach Anspruch 1, wobei die erweichende Mischung eine Kombination aus Antiflohmitteln umfasst.

8. Haustierdecke nach Anspruch 7, wobei die Antiflohmittel lang- und kurzzeitig wirkende Antiflohmittel umfassen.

9. Haustierdecke nach Anspruch 8, wobei die Antiflohmittel Insektenwachstumsregulatoren umfassen.

10. Haustierdecke nach Anspruch 9, wobei der Insektenwachstumsregulator Methopren ist.

11. Haustierdecke nach Anspruch 8, wobei die Antiflohmittel Adultizide umfassen.

12. Haustierdecke nach Anspruch 11. wobei das Adultizid Permethrin ist.

13. Haustierdecke nach Anspruch 7-12, wobei die Antiflohmittel eine Kombination aus einem Insektenwachstumsregulator und Adultizid umfassen.

14. Haustierdecke nach Anspruch 13, wobei die Kombination eine Methopren/Permethrin-Kombination ist.

15. Haustierdecke nach Anspruch 1-14, wobei der Einsatz einen Materialabschnitt umfasst, der ausgebildet ist, um einen Aufnahmebehälter für die Antiflohmittel bereitzustellen.

16. Haustierdecke nach Anspruch 15, wobei das Material ein offenzelliger Schaumstoff ist.

17. Haustierdecke nach Anspruch 16, wobei der offenzellige Schaumstoff ein Polyurethanschaumstoff ist.

18. Haustierdecke nach Anspruch 16. wobei das Material ein saugfähiges Mattenmaterial ist.

19. Haustierdecke nach Anspruch 19. wobei das saugfähige Material eine Naturzellulose ist.

20. Haustierdecke nach Anspruch 19, wobei das saugfähige Material ein synthetisches Polyestermesh ist.

21. Haustierdecke nach einem beliebigen der Ansprüche 1-20, wobei die Antiflohmittel aus der Gruppe, die Fipronil. Lufenuron, Imidacloprid, Pyriproxyfen, Diflubenzuron, Telflubenzuron, Triflumuron, Flufenoxuron, Hexaflumuron, Buprofezin, Pyrethrum, Pyrethrin, Pyrethroide und Carbamate umfasst, ausgewählt werden können.

## Revendications

1. Couverture pour animal domestique comprenant deux couches de matériau adapté pour former une poche pouvant être fermée sélectivement, une couche en matériau perméable, l'autre étant en matériau imperméable, la couverture comprenant en outre au moins un insert pour une insertion sélective dans ladite poche, ledit insert étant un matériau absorbant, l'insert ayant été prétraité avec un mélange d'esters émollient contenant au moins un agent anti-puces, la nature du matériau étant adaptée pour une dispersion optimale des ingrédients anti-puces actifs dans l'insert de manière à ce qu'en cours d'usage, la couche perméable en contact avec l'animal permette à l'animal de bénéficier de l'activité de l'agent anti-puces.

2. Couverture pour animal domestique selon la revendication 1, dans laquelle les couches forment sur la poche une surface supérieure et une surface inférieure.

3. Couverture pour animal domestique selon la revendication 2, dans laquelle la surface supérieure est perméable.

4. Couverture pour animal domestique selon la revendication 3, dans laquelle la surface supérieure est faite d'un matériau chaud et confortable destiné à être contact avec l'animal qui est dessus.

5. Couverture pour animal domestique selon la revendication 2, dans laquelle la surface inférieure est un matériau imperméable.

6. Couverture pour animal domestique selon la revendication 5, dans laquelle le matériau est sélectionné parmi le groupe composé de laminé plastique, de coton enrobé de plastique, de nylon enrobé de plastique ou de nylon enrobé de PVC.

7. Couverture pour animal domestique selon la revendication 1, dans laquelle le mélange émollient comprend une combinaison d'agents anti-puces.

8. Couverture pour animal domestique selon la revendication 7, dans laquelle les agents anti-puces comprennent des agents anti-puces à effet de courte ou longue durée.

9. Couverture pour animal domestique selon la revendication 8, dans laquelle les agents anti-puces comprennent des régulateurs de croissance des insectes.

10. Couverture pour animal domestique selon la revendication 9, dans laquelle le régulateur de croissance des insectes est du méthoprène.

11. Couverture pour animal domestique selon la revendication 8, dans laquelle les agents anti-puces comprennent des adulticides.

12. Couverture pour animal domestique selon la revendication 11, dans laquelle l'adulticide est de la perméthrine.

13. Couverture pour animal domestique selon les revendications 7 à 12, dans laquelle les agents anti-puces comprennent une combinaison de régulateur de croissance des insectes et d'adulticide.

14. Couverture pour animal domestique selon la revendication 13, dans laquelle la combinaison est une combinaison de méthoprène/perméthrine.

15. Couverture pour animal domestique selon les revendications 1 à 14, dans laquelle l'insert comprend une section de matériau adaptée pour former un réservoir pour les agents anti-puces.

16. Couverture pour animal domestique selon la revendication 15, dans laquelle le matériau est une mousse à cellules ouvertes.

17. Couverture pour animal domestique selon la revendication 16, dans laquelle la mousse à cellules ouvertes est de la mousse de polyuréthane.

18. Couverture pour animal domestique selon la revendication 16, dans laquelle le matériau est une natte absorbante.

19. Couverture pour animal domestique selon la revendication 18, dans laquelle le matériau absorbant est une cellulose naturelle.

20. Couverture pour animal domestique selon la revendication 19, dans laquelle le matériau absorbant est de la maille de polyester synthétique.

21. Couverture pour animal domestique selon l'une quelconque des revendications 1 à 20, dans laquelle les agents anti-puces peuvent être choisis parmi le groupe composé des fipronil, lufénurone, imidaclopride, pyriproxyfène, diffubenzurone, telflubenzurone, triflumurone, flufénoxurone, héxaflumurone, buprofézine, pyrèthre, pyréthrine, pyréthroïdes, carbamates.
